# EUROPÄISCHE PATENTANMELDUNG

(11) **EP 1 920 826 A2**
(43) Veröffentlichungstag der Anmeldung: **14.05.2008**
(21) Anmeldenummer: 07401002.6
(22) Anmeldetag: 05.11.2007
(51) Int. Cl.: B01J 3/04, B01J 19/00

(54) **Kühlanordnung und Verfahren zum Kühlen für Autoklaven**

(30) Priorität: 03.11.2006 DE 202006016781 U
(71) Anmelder: Industrie-Rohr-Bau GmbH, 21706 Drochtersen (DE)
(72) Erfinder: Jütke, Thorsten, 21706 Drochtersen-Assel (DE); Klein, Burkhard, 21709 Himmelpforten (DE); Köster, Hermann, 21706 Drochtersen (DE); Köster, Klaus, 21706 Drochtersen (DE)
(74) Vertreter: Hansen, Jochen

(57) **Zusammenfassung**

Die Erfindung betrifft eine Kühlanordnung für Autoklaven mit einem ersten Autoklav-Wärmetauscher (11) innerhalb des Autoklaven (1), einer Umgebungsluft beaufschlagten Wärmesenke (K) mit einem Wärmesenken-Wärmetauscher (21) und einem über den ersten Autoklav-Wärmetauscher (11) und den Wärmesenken-Wärmetauscher (21) geführten Kühlkreislauf (2) mit einem Kühlmittelrücklauf (23) und einem Kühlmittelvorlauf (24), einem darin geführten Wärmeträgermedium (25) und einer Zirkulationseinrichtung (22), wobei der Kühlkreislauf (2) geschlossen ausgebildet ist und der Wärmesenken-Wärmetauscher (21) innerhalb einer Kühlturmanordnung (3) angeordnet ist, wobei der Wärmesenken-Wärmetauscher (21) von einem von innerhalb der Kühlturmanordnung (3) befindlichen Ventilatoren (31) erzeugten Luftstrom (Y) angeströmt wird, und dass das im geschlossenen Kühlkreislauf (2) zirkulierende Wärmeträgermedium (25) ein Öl ist.

Weiter betrifft die Erfindung ein Verfahren zum Kühlen von Autoklaven.

## Beschreibung

Die Erfindung betrifft eine Kühlanordnung für Autoklaven mit einem ersten Autoklav-Wärmetauscher innerhalb des Autoklaven, einer Umgebungsluft beaufschlagten Wärmesenke mit einem Wärmesenken-Wärmetauscher und einem über den ersten Autoklav-Wärmetauscher und den Wärmesenken-Wärmetauscher geführten Kühlkreislauf mit einem Kühlmittelrücklauf und einem Kühlmittelvorlauf, einem darin geführten Wärmeträgermedium und einer Zirkulationseinrichtung.

Ferner betrifft die Erfindung ein Verfahren zum Kühlen für Autoklaven.

In der industriellen Produktion oder für Forschungsvorhaben sind Autoklaven bekannt, in denen ein erhöhtes Druck- und Temperaturniveau für Produktions-oder Forschungszwecke realisiert werden kann. Um die Zeitdauer eines Bearbeitungszykluses im Autoklaven, nämlich Druckaufbau- und Aufheizzeit bis zum Erreichen der gewünschten Produktionsbedingungen, Einwirkzeit unter den gewünschten Temperatur- und Druckbedingungen und Druckentlastung und Temperaturabbau, zu verkürzen, ist sowohl ein schnelles Aufheizen, wie auch ein effektives Kühlen des Autoklavs vorteilhaft. Zum Abkühlen des Autoklaven ist im Stand der Technik die eingangs genannte Kühlanordnung bekannt. Der im Autoklav angeordnete erste Wärmetauscher nimmt mit seinem im Kühlkreislauf geführten Wasser Wärme aus dem Autoklavinnenraum auf. Das als Wärmeträgermedium im Kühlkreislauf geführte Wasser wird dann über die Umgebungsluft beaufschlagte Wärmesenke mit Kühlturmanordnung geführt. Das damit realisierte offene Wasserkühlsystem hat jedoch folgende Nachteile:
1. Das Wasser als Wärmeträgermedium verursacht im Kühlkreislauf und insbesondere im ersten Wärmetauscher bzw. Kühlregister erhebliche Korrosionsschäden. Entsprechend hoch sind Instandhaltungs- und Fertigungsausfallkosten.
2. Ferner neigt das Kühlsystem, insbesondere das Kühlregister (erster Wärmetauscher), zur Verkalkung, da entmineralisiertes Wasser wegen erhöhter Schädigungsgefahr der Rohrsysteme und des Wärmetauschers nicht eingesetzt werden kann.
3. Alle drei Betriebsmonate ist zum Entkalken ein Säuern des Kühlregisters im Autoklav erforderlich. Entsprechende Stillstandszeiten sind vorzusehen.

Aufgabe der Erfindung ist es daher, eine Kühlanordnung für einen Autoklaven anzugeben, mit der eine effektive und resourcenschonende Kühlung unter Vermeidung von Korrosions- und Verkalkungsproblemen möglich ist.

Gelöst wird diese Aufgabe mit einer Kühlanordnung gemäß Anspruch 1.

Weiter ist es Aufgabe der Erfindung, ein Verfahren zum Kühlen von Autoklaven anzugeben, mittels dem es möglich ist, ein vorgegebenes Temperatur-Zeit-Profil besser als bisher möglich einzuhalten.

Gelöst wird diese Aufgabe mit einem Verfahren gemäß Anspruch 6.

Dadurch, dass der Kühlkreislauf geschlossen ausgebildet ist und der Wärmesenken-Wärmetauscher innerhalb einer Kühlturmanordnung angeordnet ist, wobei der Wärmesenken-Wärmetauscher von einem von innerhalb der Kühlturmanordnung befindlichen Ventilatoren erzeugten Luftstrom angeströmt wird, und dass das im geschlossenen Kühlkreislauf zirkulierende Wärmeträgermedium ein Öl ist, wird eine effektive und resourcenschonende Kühlung unter Vermeidung von Korrosions- und Verkalkungsproblemen möglich. Mit der Kombination eines geschlossen ausgebildeten Kühlkreislaufs, der in der Wärmesenke über einen zweiten Wärmetauscher geführt wird und in dem Öl als Wärmeträgermedium zirkuliert, wird eine effektive Kühlung für den Autoklav bereitgestellt. Das im geschlossenen Kühlkreislauf zirkulierte Öl führt weder zu Verkalkung noch zu Korrosion, was Stillstandszeiten der Autoklavanordnung reduziert. Das sonst alle drei Monate erforderliche Säuern des Kühlkreislaufes entfällt ebenso wie korrosionsbedingte Stillstandszeiten. Überraschenderweise konnte auch festgestellt werden, dass sich mit der erfindungsgemäßen Kühlanordnung die Prozesszeiten verkürzen. Mithin verringern sich Betriebs- und Instandhaltungskosten. Dies wird mit einer höheren Anfangsinvestition, insbesondere durch das teure Wärmeträgeröl "erkauft". Unter weiterer Berücksichtigung eines erheblich geringeren Wasserverbrauchs und eines verminderten Strom- und Heizenergiebedarfs ergeben sich insgesamt erhebliche wirtschaftliche Vorteile.

Wenn mindestens ein weiterer Autoklav mit einem zugeordneten ersten Autoklav-Wärmetauscher und entsprechendem Kühlmittelrücklauf und Kühlmittelvorlauf vorgesehen ist, wobei die Kühlmittelrückläufe miteinander verbunden sind und an einem gemeinsamen Wärmesenken-Wärmetauscher innerhalb der Kühlturmanordnung angeschlossen sind und die Kühlmittelvorläufe miteinander verbunden sind und an einem gemeinsamen Wärmesenken-Wärmetauscher innerhalb der Kühlturmanordnung angeschlossen sind und innerhalb der Kühlmittelrückläufe und/oder der Kühlmittelvorläufe einzeln ansteuerbare Regelventile vorgesehen sind, dann lassen sich so mehrere Autoklaven an einer gemeinsamen Kühlanordnung derart betrieben, dass die Kühlanordnung während des Betriebs keine oder nur geringe Leerlaufzeiten aufweist, so dass ein effizienter Betrieb der Kühlanordnung möglich ist.

Dadurch, dass ein Heizkreislauf mit einem Heizmittelrücklauf einem Heizmittelvorlauf, einer zweiten Zirkulationseinrichtung, einem zweiten Autoklav-Wärmetauscher und einer Wärmequelle vorgesehen ist, wobei der zweite Autoklav-Wärmetauscher innerhalb des Autoklaven angeordnet ist, wird ein gleichzeitiger Heiz- und Kühlbetrieb im Autoklaven möglich.

Wenn jeweils der Kühlmittelrücklauf mit dem Heizmittelrücklauf und der Kühlmittelvorlauf mit dem Heizmittelvorlauf miteinander über ein Flußsteuerungsmittel verbunden sind, wird so zum einen eine separierte Nutzung von Heizkreislauf und Kühlkreislauf und zum anderen eine gemeinsame und gegebenenfalls gleichzeitige Nutzung des ersten und des zweiten Autoklav-Wärmetauschers durch den Heizkreislauf oder den Kühlkreislauf möglich. Hierdurch kann einerseits die verwendete Autoklav-Wärmetauscherfläche während des Kühlens um die Autoklav-Wärmetauscherfläche des zweiten Autoklav-Wärmetauschers vergrößert werden und andererseits kann die Autoklav-Wärmetauscherfläche während des Heizens um die Autoklav-Wärmetauscherfläche des ersten Autoklav-Wärmetauschers vergrößert werden. Gleichwohl bleibt die getrennte Nutzung des ersten und des zweiten Autoklav-Wärmetauschers für den Autoklav-Betrieb weiterhin möglich, so dass beispielsweise während einer Haltephase besser und schneller auf Temperaturschwankungen reagiert werden kann.

Dadurch, dass zwischen erstem und/oder zweiten Autoklav-Wärmetauscher und der Wärmequelle ein Primärheizkreislauf mit einem Wärmequellen-Wärmetauscher vorgesehen ist, wobei der Wärmequellen-Wärmetauscher den Primärheizkreislauf mit dem Kühlkreislauf wärmeaustauschend verbindet und der Primärheizkreislauf mit einem primären Wärmeträgermedium Wärme von einer Wärmequelle an den Wärmequellen-Wärmetauscher mittels einer dritten Zirkulationseinrichtung transportiert, ist zum einen der Einsatz eines primären Wärmeträgermediums innerhalb des geschlossenen Primärheizkreislaufs möglich, wobei dieses speziell an die Situation Wärmetauscher und Wärmequelle angepasst sein kann und zum anderen lassen sich innerhalb des Primärheizkreislaufs weitere Wärmequellen anschließen, die dann entsprechend geschaltet ihre Wärme am Wärmetauscher abgeben. Ebenso kann diese Anordnung für den Betrieb von Wärmesenken in einem Heizkreislauf vorgesehen werden, wobei ein Wärmetauscher zwischen einer Wärmesenke und dem/den Autoklav-Wärmetauschern vorgesehen ist. Entsprechend gebe es dann einen Primärkühlkreislauf mit einem primären Wärmeträgermedium, welcher dementsprechend an die Bedingungen Wärmesenke, Wärmetauscher und Primärkühlkreislauf angepasst ist. Auch eine Kombinationsanordnung beider zuvor genannten Anordnungen ist durchaus sinnvoll und führt zu einem Gesamtsystem, welches sehr fein abgestimmt werden kann, um möglichst große Wärmemengen zu übertragen und zu transportieren.

Nachfolgend sind technische Anpassungen und Veränderungen der Kühlturmanordnung zur verbesserten Kühlung genannt, die vorrichtungsgemäß dargestellt werden.

Wenn die Kühlturmanordnung an der Wärmesenke Wasser beaufschlagte Düsen zur Naßkühlung aufweist, wird die als Kühlturmeffekt bekannte Verdunstungskälte zur zusätzlichen Kühlung herangezogen. Es kann somit auch bei Außentemperaturen von 35°C und mehr eine Abkühlung im Autoklav auf unter 50°C erreicht werden, wie dies zur sicheren Entnahme der im Autoklaven verarbeiteten Produkte gefordert ist.

Wenn die Düsen in Strömungsrichtung des Umgebungsluftstroms vor dem Wärmesenken-Wärmetauscher angeordnet sind, wird die Umgebungsluft direkt unmittelbar vor dem Durchströmen des Wärmesenken-Wärmetauschers durch den Kühlturmeffekt abgekühlt. Eine intensive Vermischung wird unterstützt, wenn die Düsenöffnungen entgegen der Luftströmung ausgerichtet sind.

Wenn die Düsen über eine Förderpumpe mit Wasser beaufschlagt sind, wobei Mittel zur Mengensteuerung oder-regelung vorgesehen sind, kann der Wasserverbrauch bei optimaler Kühlleistung möglichst gering gehalten werden. Bevorzugt beträgt die relative Feuchte des Luftstroms zwischen Düsen und zweitem Wärmetauscher maximal 98 %, bevorzugt 95 bis 98 %. Es wird somit nur der adiabate Kühleffekt der Luft ausgenutzt.

Dadurch, dass ein Außentemperatursensor und ein Feuchtemesser für die Umgebungsluft und ein Temperatursensor im Kühlkreislauf am Rücklauf des zweiten Wärmetauschers vorgesehen sind, wobei Mittel zur Ansteuerung der Naßkühlung vorgesehen sind, die in Abhängigkeit der gemessenen Temperaturen und Feuchte die Naßkühlung aktiviert oder deaktiviert, wird die Naßkühlung nur verwendet, wenn die entsprechenden Randbedingungen erfüllt sind. In den meisten Betriebssituationen wird allein der geschlossene Kühlkreislauf ohne ergänzende offene Naßkühlung zum Herabkühlen des Autoklaven reichen.

Bevorzugt sind die Einschaltbedingungen der Naßkühlung bei einer Außentemperatur größer gleich 17°C, eine Mindestaufnahmefähigkeit der Außenluft für Wasser von 2 g Wasser/m³ Luft, und eine Kühlmittelrücklauftemperatur am Wärmesenken-Wärmetauscher von mindestens 10°C über der gemessenen Außentemperatur. Somit werden die Düsen genau nach dem errechneten Wasseraufnahmevermögen der angesaugten Luft mit definierten Wassermengen beaufschlagt. Mit diesen Vorkehrungen kann gegenüber dem bekannten offenen Wasserkühlsystem der Wasserverbrauch um mindestens 80 % reduziert werden.

Dadurch, dass die Ventilatoren in Richtung des Luftstroms stromabwärtig des Wärmesenken-Wärmetauschers angeordnet sind, wirkt die Abwärme der Ventilatormotoren nicht temperaturerhöhend auf den Umgebungsluftstrom im Bereich des Wärmesenken-Wärmetauschers. Vielmehr erfolgt der Wärmeübergang von den Ventilatormotoren auf die Umgebungsluft erst strömungsabwärtig vom Wärmesenken-Wärmetauscher, also für die gewünschte Kühlleistung unschädlich.

Wenn im Kühlmittelvorlauf des Wärmesenken-Wärmetauschers ein Temperatursensor vorgesehen ist, wobei Mittel zur Ansteuerung der Ventilatoren vorgesehen sind, die in Abhängigkeit dieser Vorlauftemperatur die Ventilatoren aktivieren und/oder drehzahlregeln oder deaktivieren, werden die Ventilatoren nur angesteuert, sofern ein erhöhter Luftstrom erforderlich ist und dann auch nur soweit wie für die momentane Kühlleistung erforderlich, was im Dauerbetrieb eine erhebliche Energie- und damit Kostenersparnis bedeutet. Bevorzugt beträgt die Grenztemperatur zum Einschalten der Ventilatoren 40°C. Entsprechend reduziert sich der Stromverbrauch um ca. 20 %.

Wenn der Kühlkreislauf eine Zirkulationspumpe aufweist, die frequenzgeregelt ausgebildet ist, kann der Volumenstrom des Wärmeträgermediums in Abhängigkeit der abzuführenden Wärmemenge (Abkühlgeschwindigkeit des Autoklaven) durch frequenzgeregelte Pumpen verändert werden.

Nachfolgend erfolgt die Beschreibung der verfahrensgemäßen Ansprüche.

Mit den Verfahrensschritten
a) Feststellen des Zeitpunkts einer notwendigen Kühlung,
b) Überwachen der Temperatur im Autoklaven,
c) Vergleichen mit einem vorgegebenen Temperatur-Zeit-Profil,
d) bedarfsweises Aktivieren des Kühlkreislaufs und
e) Feststellen des Prozessendes,
wobei die Schritte b) bis d) während des gesamten Prozesses wiederholt ausgeführt werden, lässt sich ein Temperatur-Zeit-Profil zum Kühlen im Autoklaven für Autoklav-gebundene Prozesse sehr genau einhalten. Etwaige zusätzliche Steuerungsprozesse können in dieses Verfahren integriert werden, so dass eine Kühlturmanordnung leistungsbezogen gesteuert wird.

Um die Kühlleistung einer Kühlturmanordnung zur Kühlung eines Autoklaven zu erhöhen, wird ein Luftstrom innerhalb der Kühlturmanordnung des Kühlkreislaufs erzeugt. Dieser Luftstrom ist einstellbar.

Zur weiteren Verstärkung der Kühlleistung wird in den Luftstrom Wasser gespritzt, wobei dies durch ein zuvor und/oder verfahrensbegleitendes auszuführendes Messen und Auswerten der relativen Luftfeuchtigkeit und Temperaturen zugelassen wird.

Um eine gemeinsame Kühlturmanordnung effektiv auszunutzen, werden mehrerere parallel, und gegebenenfalls zeitversetzt ablaufende Autoklav-gebundene Prozesse zum Einhalten eines Temperatur-Zeit-Profils gemeinsam von einem Kühlkreislauf gekühlt, wobei die unterschiedlichen oder auch gleichen Kühlleistungsanforderungen einzelner Autoklaven durch ein Regeln und/oder Begrenzen von Durchflußmengen für das Wärmeträgermedium im Kühlkreislauf erfolgt.

Dadurch, dass während eines Autoklav-gebundenen Prozesses gleichzeitig gekühlt und geheitzt wird, wobei mit unterschiedlichen Intensitäten von Kühl- und Heizleistung gefahren wird, wird so ein sensibleres Steuern und Regeln des Autoklaven möglich. Etwaige intern ablaufende exotherme Reaktionen oder aber auch andere intern ablaufende Prozesse können besser abgefangen werden, um so innerhalb von vorgegebenen Toleranzgrenzen zu bleiben.

Nachfolgend wird ein Ausführungsbeispiel der Erfindung anhand der beiliegenden Zeichnung detailliert beschrieben.

Darin zeigen:
- Fig. 1: die erfindungsgemäße Kühlanordnung nach einem ersten Ausführungsbeispiel in einem Prinzipschaltbild,
- Fig. 2: die erfindungsgemäße Kühlanordnung nach einem zweiten Ausführungsbeispiel in einem Prinzipschaltbild,
- Fig. 3: die erfindungsgemäße Kühlanordnung nach einem dritten Ausführungsbeispiel in einem Prinzipschaltbild und
- Fig. 4: die erfindungsgemäße Kühlanordnung nach einem vierten Ausführungsbeispiel in einem Prinzipschaltbild.

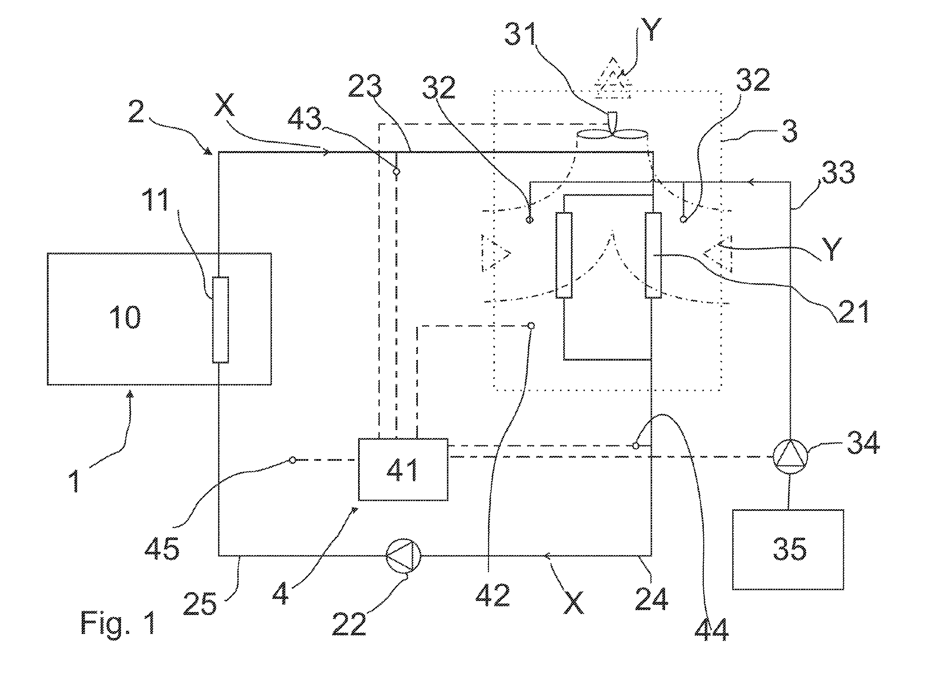

In Fig. 1 ist in einer Prinzipskizze die Kühlanordnung für einen Autoklav 1 dargestellt. Dem Autoklaven 1 ist ein nicht dargestelltes Heizsystem sowie eine nicht dargestellte Druckeinheit zur Erzeugung eines Autoklav-Innendrucks zugeordnet, die ein erhöhtes Druck- und Temperaturniveau im Autoklavinnenraum 10 erzeugen. Beispielsweise kann für das "Backen" von Kohlenfaserverbundwerkstoffen eine Autoklavinnentemperatur von 180°C und ein Druck von 6 bar erforderlich sein.

Im Innenraum 10 des Autoklaven 1 ist ein erster Autoklav-Wärmetauscher 11 angeordnet, durch den ein Kühlkreislauf 2 geführt ist. Der Kühlkreislauf 2 ist als geschlossener Kühlkreislauf ausgebildet und enthält ein Öl als Wärmeträgermedium 25. Das Wärmeträgermedium 25 ist beispielsweise ein reines Mineralöl mit einem Stockpunkt von -55°C, einem Flammpunkt von 150°C und einer spezifischen Wärmekapazität von 2,1 KJ/(kg K). Ein derartiges Kühlöl wird beispielsweise unter der Markenbezeichnung "AVIATICON THERMO KA" von der Firma Finke Mineralölwerk GmbH, Bremen angeboten.

Neben dem im Autoklav 1 angeordneten ersten Autoklav-Wärmetauscher 11 weist der Kühlkreislauf 2 als Wärmesenke einen Wärmesenken-Wärmetauscher 21, der im dargestellten Ausführungsbeispiel zweiteilig ausgebildet ist, auf. Ferner ist im Kühlkreislauf 2 eine Zirkulationseinrichtung 22, beispielsweise eine frequenzgeregelte Zirkulationspumpe angeordnet, die das Wärmeträgermedium 25 in Transportrichtung X zirkuliert.

Bezogen auf den Wärmesenken-Wärmetauscher 21 ist die Zirkulationsleitung stromaufwärtig als Kühlmittelrücklauf 23 bezeichnet. Entsprechend ist die Zirkulationsleitung stromabwärtig des Wärmesenken-Wärmetauschers 21 als Kühlmittelvorlauf 24 bezeichnet.

Im Bereich des Wärmesenken-Wärmetauschers 21 ist eine Kühlturmanordnung 3, hier gepunktet umrandet, vorgesehen. Die Kühlturmanordnung 3 besteht aus einem oder mehreren Ventilatoren 31, die einen intensiven Luftstrom Y von Umgebungsluft erzeugen. Stromaufwärtig des Umgebungsluftstroms Y ist der oder die Wärmesenken-Wärmetauscher 21 angeordnet, wie dies schematisch in Fig. 1 dargestellt ist. Stromaufwärtig des Umgebungsluftstroms Y vor dem Wärmesenken-Wärmetauscher 21 sind Düsen 32, beispielsweise in Form eines Düsenstocks zum Vernebeln von Wasser angeordnet. Die Düsen 32 sind an einer Wasserleitung 33 mit Förderpumpe 34 angeschlossen. Die Förderpumpe 34 fördert das zu vernebelnde Wasser aus einem Wasserreservoir oder Wasseranschluss 35.

Ferner sind Mittel zur Steuerung und Regelung 4 mit einer Steuerzentrale 41 für die Kühlanordnung vorgesehen. Die Steuerzentrale 41 weist Wirkverbindungen zu einem Temperatursensor 43 im Kühlmittelrücklauf 23, einem Temperatursensor 44 im Kühlmittelvorlauf 24 und einem Außentemperatursensor 45 zur Erfassung der Außenlufttemperatur auf. Ferner sind Wirkverbindungen zu einem Feuchtesensor 42 vorgesehen. Weiter sind Wirkverbindungen von der Steuerzentrale 41 zur Förderpumpe 34, zur Zirkulationspumpe 22 und zu den Ventilatoren 31 vorgesehen. Die Wirkverbindungen sind in Fig. 1 gestrichelt ohne Bezugszeichen dargestellt.

Nachfolgend wird die Wirkungsweise der erfindungsgemäßen Kühlanordnung anhand der Fig. 1 beschrieben.

Zur Durchführung eines Produktionsablaufs im Autoklav 1 muss der Autoklavinnenraum 10 nach einer Haltephase definiert abgekühlt und entspannt werden. Zur Kühlung ist die in Fig. 1 dargestellte Kühlanordnung mit dem ersten Autoklav-Wärmetauscher 11 im Autoklavinnenraum 10 vorgesehen. Sobald der Kühlvorgang beginnen soll, wird von der Steuerzentrale 41 die Zirkulationspumpe 22 aktiviert, womit das im Kühlkreislauf 2 befindliche Wärmeträgermedium 25 (Kühlmittel) in Form eines Mineralöls in Transportrichtung X durch den ersten Autoklav-Wärmetauscher 11 gefördert wird. Entsprechend nimmt das Wärmeträgermedium 25 Wärme auf, so dass sich die am Temperatursensor 44 im Kühlmittelvorlauf 24 des Wärmesenken-Wärmetauschers 21 gemessene Temperatur erhöht. Wenn die dort vom Temperatursensor 44 gemessene Temperatur 40°C erreicht, werden von der Steuerzentrale 41 über entsprechende Wirkverbindungen die Ventilatoren 31 angesteuert.

Die Ventilatoren 31 erzeugen in der Kühlturmanordnung 3 einen intensiven Umgebungsluftstrom entsprechend der Pfeildarstellung Y durch die Wärmesenken-Wärmetauscher 21, so dass das darin zirkulierte Wärmeträgermedium 25 nunmehr stärker abgekühlt wird. Entsprechend verringert sich die am Kühlmitteltemperatursensor 43 im Kühlmittelrücklauf 23 erfasste Temperatur.

Wird von der Steuerzentrale 41 ein erhöhter Kühlbedarf festgestellt, wird von der Steuerzentrale 41 die Förderpumpe 34 angesteuert. Die Förderpumpe 34 fördert Wasser von dem Wasserreservoir 35 über Wasserleitung 33 zu den Düsenstöcken 32. Dort wird das Wasser vernebelt in den Luftstrom Y in Strömungsrichtung vor den Wärmesenken-Wärmetauschern 21 ausgegeben. Entsprechend erhöht sich die an den Feuchtesensoren 42 gemessene relative Luftfeuchtigkeit. Die Messwerte der Feuchtesensoren 42 werden in der Steuerzentrale 41 mit einem voreingestellten Maximalwert, beispielsweise 98 % verglichen und nach den Randbedingungen die durch die Förderpumpe 34 geförderte Wassermenge angepasst, um einen rein adiabaten Kühleffekt der Luft auszunutzen.

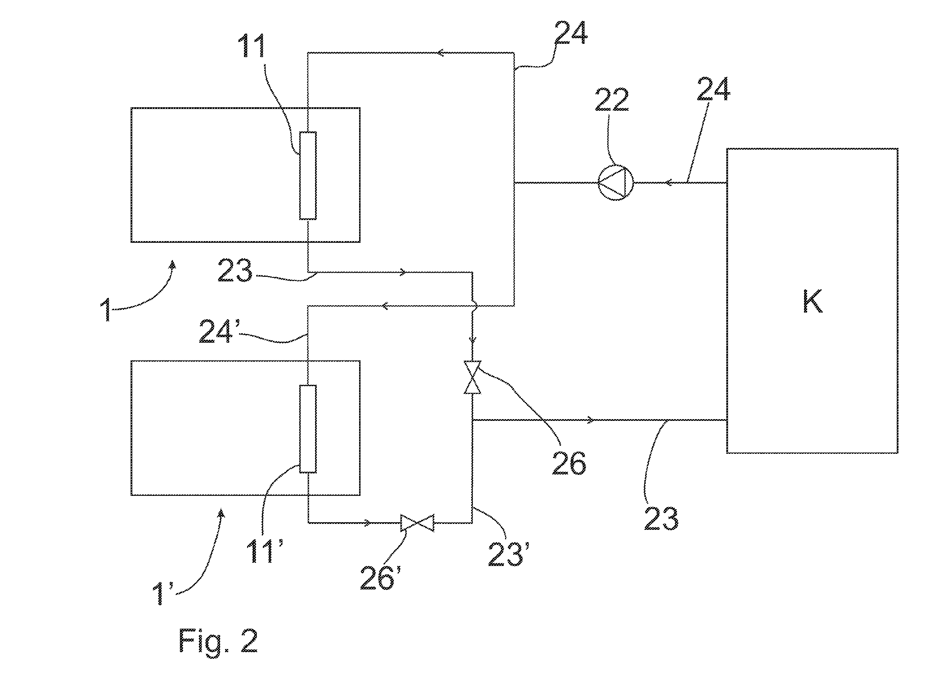

In Fig. 2 ist die erfindungsgemäße Kühlanordnung nach einem zweiten Ausführungsbeispiel in einem Prinzipschaltbild dargestellt. Hierin sind zwei Autoklaven 1 und 1' mit jeweils einem innerhalb des Autoklavinnenraums befindlichen ersten Autoklav-Wärmetauscher 11 und 11' dargestellt.

Weiter ist eine Wärmesenke K dargestellt, die entsprechend als Kühlturmanordnung ausgebildet ist.

Von der Wärmesenke K kommend geht ein Kühlmittelvorlauf 24, welcher sich in dem Kühlmittelvorlauf 24 für den Autoklav 1 und den Kühlmittelvorlauf 24' für den Autoklav 1' aufteilt. In dem ersten Stück Kühlmittelvorlauf 24 befindet sich eine Zirkulationseinrichtung 22.

Die jeweils zu den entsprechenden Autoklaven 1 und 1' gehörenden Kühlmittelvorläufe 24 und 24' sind an dem jeweiligen ersten Autoklav-Wärmetauscher 11 und 11' innerhalb des jeweiligen Autoklaven 1 bzw. 1' angeschlossen. Auf der jeweils gegenüberliegenden Seite des jeweils ersten Autoklav-Wärmetauschers 11 und 11' ist jeweils ein Kühlmittelrücklauf 23 bzw. 23' angeschlossen.

Die beiden Kühlmittelrückläufe 23 und 23' werden zu einem gemeinsamen Kühlmittelrücklauf 23 zusammengeführt. Dieser gemeinsame Kühlmittelrücklauf 23 wird weiter zur Wärmesenke K geführt, wodurch sich der Kühlkreislauf 2 schließt.

Innerhalb der Kühlmittelrückläufe 23 und 23' ist jeweils ein erstes Regelventil 26, 26' angeordnet. Diese ersten Regelventile sind getrennt voneinander ansteuerbar. Dies kann beispielsweise von einer zentralen Kontrolleinheit durchgeführt werden, wobei auch gleichzeitig deren Einstellungen kontrollierbar sind. Außerdem können Sensoren vorgesehen sein, um die Temperaturen des Wärmeträgermediums 25 an unterschiedlichen Stellen innerhalb des Kühlkreislaufs 2 zu detektieren.

Funktionsgemäß wird, sobald eine Kühlanforderung detektiert wird, wie in Fig. 1 bereits beschrieben, die Zirkulationseinrichtung 22 aktiviert, die das innerhalb des Kühlkreislaufs 2 befindliche Wärmeträgermedium 25 zirkulieren lässt.

Durch die ersten Regelventile 26 und 26' wird der Durchfluss des Wärmeträgermediums 25 zu den jeweilig entsprechenden Autoklaven 1 und 1' bzw. zu den ersten Autoklav-Wärmetauschern 11 und 11' kontrolliert gesteuert. Hierbei kann ein einzelner Autoklav 1 oder 1' gekühlt werden, indem eines der beiden ersten Regelventile 26 oder 26' geöffnet ist, wobei das andere entsprechend geschlossen ist. Aber auch beide Autoklaven können gleichzeitig gekühlt werden, wobei die beiden ersten Regelventile 26 und 26' geöffnet sein müssen. Eine Feinjustierung beider Kühlleistungen durch teilweises Öffnen ist selbstverständlich auch möglich, ebenso wie das komplette schließen beider ersten Regelventile 26 und 26', wobei auch die Zirkulationseinrichtung 22 den Betrieb einstellt.

Eine Erweiterung auf drei oder mehr Autoklaven ist, je nachdem wie groß die Kühlleistung der Wärmesenke K ist, denkbar.

Wenn bei mehreren Autoklaven zeitlich unterschiedliche Temperatur-Zeit-Profile gefahren werden und sich Abkühlphasen evtl. nur geringfügig überdecken, jedoch so gesteuert sind, dass zumindest einer der angesteuerten Autoklaven sich in einer Kühlphase befindet, so kann die volle Leistung der Kühlanordnung ohne Abschaltung ausgenutzt werden.

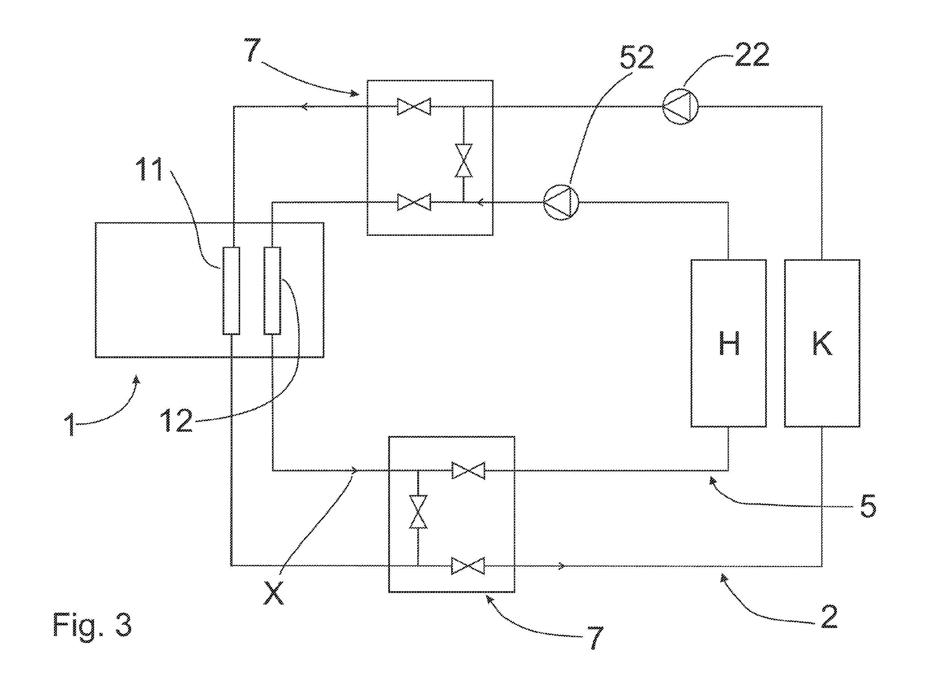

Die Fig. 3 zeigt die erfindungsgemäße Kühlanordnung nach einem dritten Ausführungsbeispiel in einem Prinzipschaltbild.

Hier ist ein Autoklav 1 mit einem ersten Autoklav-Wärmetauscher 11 und einem zweiten Autoklav-Wärmetauscher 12 dargestellt. Der erste Autoklav-Wärmetauscher 11 ist über einen Kühlkreislauf 2 mit einem Wärmesenken-Wärmetauscher 21 in Form einer Wärmesenke K verbunden.

Der Kühlkreislauf 2 wird über eine Zirkulationseinrichtung 22 betrieben, wobei die Zirkulationseinrichtung 22 das sich innerhalb des Kühlkreislaufs 2 befindliche Wärmeträgermedium 25 zirkulieren läßt. Hierdurch wird ein Wärmetransport von dem ersten Autoklav-Wärmetauscher 11 zur Wärmesenke K sicher gestellt.

Weiter ist ein zweiter Wärmekreislauf in Form eines Heizkreislaufs 5 dargestellt. Dieser Heizkreislauf 5 wird durch Rohrverbindungen realisert, die den zweiten Autoklav-Wärmetauscher 12 mit einer Wärmequelle H wärmeaustauschend verbindet.

Innerhalb des Heizkreislaufs 5 zirkuliert dasselbe Wärmeträgermedium 25 wie in dem Kühlkreislauf 2, wird jedoch hier durch die Zirkulationseinrichtung 52 angetrieben, die unabhängig von der Zirkulationseinrichtung 22 gesteuert wird.

In dieser Figur 3 ist besonderes Augenmerk auf die Flusssteuerungsmittel 7 zu richten. Die Flusssteuerungsmittel 7 bestehen jeweils in diesem dargestellten Beispiel aus drei Regelventilen und einer Verbindungsleitung zwischen dem Heizkreislauf und dem Kühlkreislauf, womit diese Wärmetragermediumaustauschend verbindbar sind. Die Regelventile sind innerhalb des Flusssteuerungsmittels so angeordnet, dass das Regelventil innerhalb des Kühlkreislaufs 2 bzw. Heizkreislaufs 5 in Transportrichtung X hinter der jeweiligen Verbindungsstelle zwischen Verbindungsleitung und dem jeweiligen Wärmekreislauf angeordnet ist. Die Regelventile sind einzeln ansteuerbar, jedoch als Gesamteinheit, nämlich als Flusssteuerungsmittel 7 zu betrachten.

Das Flusssteuerungsmittel 7 ist so steuerbar, dass zum einen beide Wärmekreisläufe, Heizkreislauf 5 und Kühlkreislauf 2 separat gesteuert und gefahren werden können, so dass der erste Autoklav-Wärmetauscher 11 mit dem Kühlkreislauf 2 verbunden ist und der zweite Autoklav-Wärmetauscher 12 mit dem Heizkreislauf 5 verbunden ist, und zum anderen der erste Autoklav-Wärmetauscher 11 und der zweite Autoklav-Wärmetauscher 12 mit entweder dem Heizkreis 5 oder dem Kühlkreis 2 verbunden sind. Hierdurch wird eine Vergrößerung der Autoklav-Wärmetauscherfläche realisiert, wie es beispielsweise in der Aufheiz- und der Abkühlphase eines abzufahrenden Temperatur-Zeit-Profils sinnvoll ist. Während der Haltephase ist es vorteilhaft, beide Wärmekreise zu trennen, um schnell auf Temperaturschwankungen reagieren zu können.

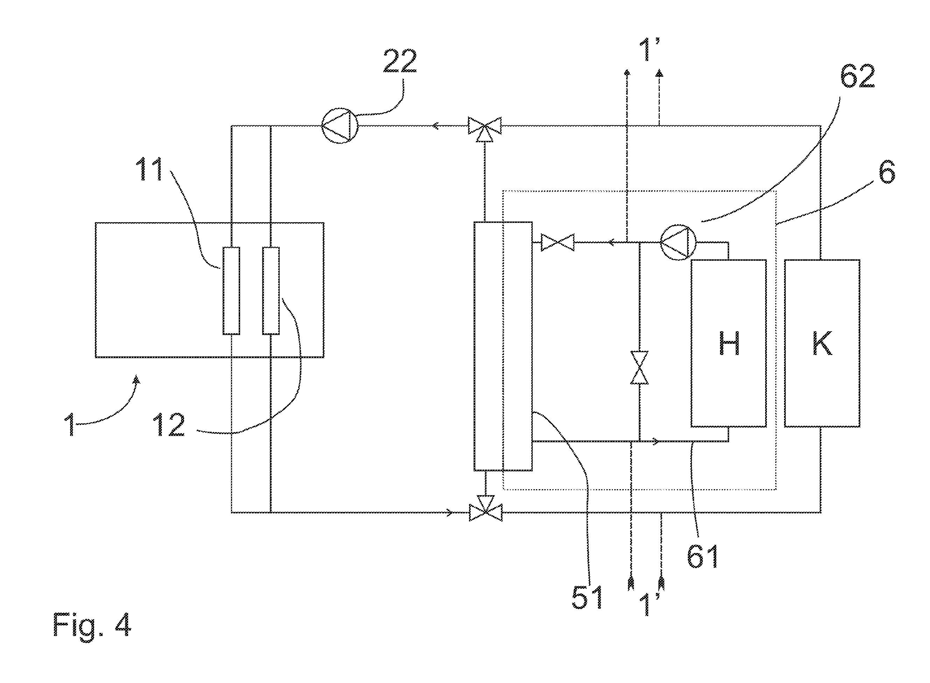

Die Fig. 4 zeigt die erfindungsgemäße Kühlanordnung nach einem vierten Ausführungsbeispiel in einem Prinzipschaltbild.

Hierbei ist ein Autoklav 1 mit einem ersten Autoklav-Wärmetauscher 11 und einem zweiten Autoklav-Wärmetauscher 12, die beide an einem Kühlkreislauf 2 angeschlossen sind, dargestellt.

Der Kühlkreislauf 2 weisen die bereits genannten Anordnungsmerkmale auf. Jedoch ist in dieser Anordnung im Kühlkreislauf zwischen Wärmequelle H und den beiden Autoklav-Wärmetauschern 11 und 12 ein Wärmequellen-Wärmetauscher 51 vorgesehen. Dieser Wärmequellen-Wärmetauscher 51 verbindet den Kühlkreislauf 2 mit einem Primärheizkreislauf 6.

Dieser Primärheizkreislauf 6 besteht aus einem Wärmekreislauf, einer dritten Zirkulationseinrichtung 62, dem o.g. Wärmequellen-Wärmetauscher 51, der Wärmequelle H und einem Wärmeträgermedium 61.

Verfahrensgemäß wird die Wärme der Wärmequelle H auf das Wärmeträgermedium 61 übertragen und zu dem Wärmequellen-Wärmetauscher 51 mit Hilfe der dritten Zirkulationseinrichtung 62 transportiert. Dort wird die Wärme auf das Wärmeträgermedium 25 des Kühlkreislaufs 2 übertragen und mittels der Zirkulationseinrichtung 22 an die beiden Autoklav-Wärmetauscher 11 und 12 des Autoklaven 1 transportiert.

Hierdurch wird das Anpassen des Wärmeträgermediums an unterschiedliche Anforderungen möglich. Ebenso wird die Nutzung unterschiedlicher parallel zueinander angeordneter Wärmequellen H und H', wobei H' hier nicht weiter dargestellt wurde, möglich, wobei eine der Wärmequellen nicht mittels des Wärmeträgermediums 25 aus dem Heizkreislauf 2 betrieben werden kann, beispielsweise durch zu Hohe Temperaturen der Wärmequelle an deren Wärmeabgabepunkt. Somit erhält man eine Rückfalloption für den Fall, dass eine Wärmequelle H oder H' ausfällt.

Die zuvor beschriebene Anordnung mehrerer Wärmequellen parallel zueinander kann in ähnlicher Weise ebenfalls für die Wärmesenken realisiert werden, so dass auch hier mehrere Wärmesenken K und K' zum parallelen Betrieb aufgennommen werden können, wobei eine der Wärmesenken nicht mit dem Wärmeträgermedium 25 des Kühlkreislaufs gefahren werden kann oder soll.

### Bezugszeichenliste

- 1, 1': Autoklav
- 10: Autoklavinnenraum
- 11, 11': erster Autoklav-Wärmetauscher
- 12: zweiter Autoklav-Wärmetauscher

- 2: Kühlkreislauf
- 21: Wärmesenken-Wärmetauscher
- 22: Zirkulationseinrichtung
- 23, 23': Kühlmittelrücklauf
- 24, 24': Kühlmittelvorlauf
- 25: Wärmeträgermedium
- 26, 26': erste Regelventile

- 3: Kühlturmanordnung
- 31: Ventilator
- 32: Düse, Düsenstock
- 33: Wasserleitung
- 34: Förderpumpe
- 35: Wasserreservoir, Wasseranschluss

- 4: Mittel zur Steuerung und Regelung
- 41: Steuerzentrale
- 42: Feuchtesensor
- 43: Kühlmitteltemperatursensor
- 44: Kühlmitteltemperatursensor
- 45: Außentemperatursensor

- 5: Heizkreislauf
- 51: Wärmequellen-Wärmetauscher
- 52: zweite Zirkulationseinrichtung
- 53: Heizmittelrücklauf
- 54: Heizmittelvorlauf

- 6: Primärheizkreislauf
- 61: primäres Wärmeträgermedium
- 62: dritte Zirkulationseinrichtung

- 7: Flußsteuerungsmittel

- H: Wärmequelle
- K: Wärmesenke
- X: Transportrichtung
- Y: Luftstrom

## Patentansprüche

1. Kühlanordnung für Autoklaven mit einem ersten Autoklav-Wärmetauscher (11) innerhalb des Autoklaven (1), einer Umgebungsluft beaufschlagten Wärmesenke (K) mit einem Wärmesenken-Wärmetauscher (21) und einem über den ersten Autoklav-Wärmetauscher (11) und den Wärmesenken-Wärmetauscher (21) geführten Kühlkreislauf (2) mit einem Kühlmittelrücklauf (23) und einem Kühlmittelvorlauf (24), einem darin geführten Wärmeträgermedium (25) und einer Zirkulationseinrichtung (22), **dadurch gekennzeichnet, dass** der Kühlkreislauf (2) geschlossen ausgebildet ist und der Wärmesenken-Wärmetauscher (21) innerhalb einer Kühlturmanordnung (3) angeordnet ist, wobei der Wärmesenken-Wärmetauscher (21) von einem von innerhalb der Kühlturmanordnung (3) befindlichen Ventilatoren (31) erzeugten Luftstrom (Y) angeströmt wird, und dass das im geschlossenen Kühlkreislauf (2) zirkulierende Wärmeträgermedium (25) ein Öl ist.

2. Kühlanordnung für Autoklaven nach Anspruch 2, **dadurch gekennzeichnet, dass** mindestens ein weiterer Autoklav (1') mit einem zugeordneten ersten Autoklav-Wärmetauscher (11') und entsprechendem Kühlmittelrücklauf (23') und Kühlmittelvorlauf (24') vorgesehen ist, wobei die Kühlmittelrückläufe (23, 23') miteinander verbunden sind und an einem gemeinsamen Wärmesenken-Wärmetauscher (21) innerhalb der Kühlturmanordnung (3) angeschlossen sind und die Kühlmittelvorläufe (24, 24') miteinander verbunden sind und an einem gemeinsamen Wärmesenken-Wärmetauscher (21) innerhalb der Kühlturmanordnung (3) angeschlossen sind und innerhalb der Kühlmittelrückläufe (23, 23') und/oder der Kühlmittelvorläufe (24, 24') einzeln ansteuerbare Regelventile (26, 26') vorgesehen sind.

3. Kühlanordnung für Autoklaven nach Anspruch 1 oder 2, **dadurch gekennzeichnet, dass** ein Heizkreislauf (5) mit einem Heizmittelrücklauf (53), einem Heizmittelvorlauf (54), einer zweiten Zirkulationseinrichtung (52), einem zweiten Autoklav-Wärmetauscher (12) und einer Wärmequelle (H) vorgesehen ist, wobei der zweite Autoklav-Wärmetauscher (12) innerhalb des Autoklaven (1) angeordnet ist.

4. Kühlanordnung für Autoklaven nach Anspruch 3, **dadurch gekennzeichnet, dass** jeweils der Kühlmittelrücklauf (23) mit dem Heizmittelrücklauf (53) und der Kühlmittelvorlauf (24) mit dem Heizmittelvorlauf (54) miteinander über ein Flußsteuerungsmittel (7) verbunden sind, so dass zum einen eine separierte Nutzung von Heizkreislauf (5) und Kühlkreislauf (2) und zum anderen eine gemeinsame Nutzung des ersten (11) und des zweiten Autoklav-Wärmetauschers (12) durch den Heizkreislauf (5) oder den Kühlkreislauf (2) möglich ist.

5. Kühlanordnung für Autoklaven nach Anspruch 3 oder 4, **dadurch gekennzeichnet, dass** zwischen erstem und/oder zweiten Autoklav-Wärmetauscher (11,12) und der Wärmequelle (H) ein Primärheizkreislauf (6) mit einem Wärmequellen-Wärmetauscher (51) vorgesehen ist, wobei der Wärmequellen-Wärmetauscher (51) den Primärheizkreislauf (6) mit dem Kühlkreislauf (2) wärmeaustauschend verbindet und der Primärheizkreislauf (6) mit einem primären Wärmeträgermedium (61) Wärme von einer Wärmequelle (H) an den Wärmequellen-Wärmetauscher (51) mittels einer dritten Zirkulationseinrichtung (62) transportiert.

6. Verfahren zum Kühlen mit einem Kühlkreislauf (2) nach einem der vorangehenden Ansprüche für Autoklav-gebundene Prozesse zum Einhalten eines Temperatur-Zeit-Profils im Autoklaven, **gekennzeichnet durch** die Schritte:
a) Feststellen des Zeitpunkts einer notwendigen Kühlung,
b) Überwachen der Temperatur im Autoklaven (1)
c) Vergleichen mit einem vorgegebenen Temperatur-Zeit-Profil,
d) bedarfsweises Aktivieren des Kühlkreislaufs (2) und
e) Feststellen des Prozessendes,
wobei die Schritte b) bis d) während des gesamten Prozesses wiederholt ausgeführt werden.

7. Verfahren nach Anspruch 6, **dadurch gekennzeichnet, dass** ein Luftstrom (Y) innerhalb der Kühlturmanordnung (3) des Kühlkreislaufs (2) erzeugt wird.

8. Verfahren nach Anspruch 7, **dadurch gekennzeichnet, dass** in den Luftstrom (Y) Wasser gespritzt wird, wobei dies durch ein zuvor und/oder verfahrensbegleitendes auszuführendes Messen und Auswerten der relativen Luftfeuchtigkeit und Temperaturen zugelassen wird.

9. Verfahren nach Anspruch 6, 7 oder 8, **dadurch gekennzeichnet, dass** mehrerere parallel, und gegebenenfalls zeitversetzt ablaufende Autoklav-gebundene Prozesse zum Einhalten eines Temperatur-Zeit-Profils gemeinsam von einem Kühlkreislauf (2) gekühlt werden, wobei die unterschiedlichen oder auch gleichen Kühlleistungsanforderungen einzelner Autoklaven durch ein Regeln und/oder Begrenzen von Durchflußmengen für das Wärmeträgermedium (25) im Kühlkreislauf (2) erfolgt.

10. Verfahren nach einem der Ansprüche 6 bis 9, **dadurch gekennzeichnet, dass** während eines Autoklav-gebundenen Prozesses gleichzeitig gekühlt und geheitzt wird, wobei mit unterschiedlichen Intensitäten von Kühl- und Heizleistung gefahren wird.
